# EUROPÄISCHE PATENTSCHRIFT

(11) **EP 0 614 402 B1**
(45) Veröffentlichungstag und Bekanntmachung des Hinweises auf die Patenterteilung: **07.05.1997**
(21) Anmeldenummer: 92919480.1
(22) Anmeldetag: 16.09.1992
(51) Int. Cl.: B04B 11/04, B04B 1/14, B04B 1/20, F16C 33/66

(54) **ZENTRIFUGE ZUR KONTINUIERLICHEN TRENNUNG VON STOFFEN UNTERSCHIEDLICHER DICHTE**
CENTRIFUGE FOR THE CONTINUOUS SEPARATION OF SUBSTANCES OF DIFFERENT DENSITIES
CENTRIFUGEUSE POUR LA SEPARATION CONTINUE DE MATIERES DE DIFFERENTES DENSITES

(30) Priorität: 16.09.1991 DE 4130759
(43) Veröffentlichungstag der Anmeldung: 14.09.1994
(73) Patentinhaber: Flottweg GmbH, D-84137 Vilsbiburg (DE)
(72) Erfinder: KREILL, Walter, D-8313 Vilsbiburg (DE)
(74) Vertreter: Flügel, Otto, Dipl.-Ing.
(86) Internationale Anmeldenummer: DE9200790
(87) Internationale Veröffentlichungsnummer: WO9305884

(56) Entgegenhaltungen:
- EP-A- 0 118 152
- DE-A- 3 620 912
- DE-A- 3 900 477
- DE-A- 3 921 327
- US-A- 3 729 128
- US-A- 3 858 794
- US-A- 4 973 024
- SOVIET INVENTIONS ILLUSTRATED Section Ch, Week B31, 17. September 1979 Derwent Publications Ltd., London, GB; Class J01, AN 57672B/31 & SU,A,628 957 (MOSCOW MEAT DAIRY INST.) 7 September 1978
- PATENT ABSTRACTS OF JAPAN vol. 9, no. 146 (M-389)(1869) 21. Juni 1985 & JP,A,60 23 680 (AISHIN SEIKI KK.) 6 Februar 1985
- PATENT ABSTRACTS OF JAPAN vol. 9, no. 63 (M-365)(1786) 20. März 1985 & JP,A,59 197 682 (KEIICHI YASUKAWA) 9 November 1984
- PATENT ABSTRACTS OF JAPAN vol. 9, no. 311 (M-436)(2034) 7. Dezember 1985 & JP,A, 60 146 975 (KATOU HATSUJIYOU KK.) 2 August 1985
- SOVIET INVENTIONS ILLUSTRATED Section PQ, Week 8918, 14. Juni 1989 Derwent Publications Ltd., London, GB; Class Q, AN 89-136802/18 & SU,A,1 434 163 (GLADYSHEV G N) 30 Oktober 1988
- PATENT ABSTRACTS OF JAPAN vol. 8, no. 220 (M-330)(1657) 6. Oktober 1984 & JP,A,59 103 088 (KEIICHI YASUKAWA) 14. Juni 1984

## Beschreibung

Die Erfindung betrifft Zentrifugen zur Trennung von Stoffen unterschiedlicher Wichte, beispielsweise von Feststoff-Flüssigkeits-Gemischen, mit mindestens einer im rotierenden Bereich der Zentrifuge mitdrehend angeordneten, durch ein mitdrehendes mechanisches Stellglied gesteuerten Einrichtung für die Bestimmung des Betriebs, beispielsweise Entleerungsventile, periodisch arbeitende Austragsventile, Wehrhöhenverstelleinrichtungen, Druckanpassungsvorrichtungen, Temperatursicherungseinrichtungen und dergleichen.

Unter dem durch die gesteuerten Einrichtungen bestimmten Betrieb sind hier unter gezieltem Eingriff von außen gesteuerte Betriebsabläufe zu verstehen, wie sie beispielsweise durch Wehrscheibenverstelleinrichtungen, Ablaßventile, Restentleerungsventile und dergleichen beeinflußbar sind. Desweiteren gehört die Sicherstellung von Betriebsbedingungen dazu, also Regelungen z.B. in Abhängigkeit von der Trübung des Zentrats oder der Restfeuchte des Feststoffes. Dazu können insbesondere Wehrhöhenverstelleinrichtungen - wie radial verschiebbare Wehrscheiben, zwei hintereinander angeordnete Wehrscheiben unterschiedlichen Durchmessers mit steuerbarem Zwischenablauf zur Spiegelabsenkung, Wehrscheiben in Verbindung mit einem auf größerem Durchmesser angeordneten, gesteuerten Ventil zur Spiegelabsenkung - Ablaßventile - wie Ventile zum Ablassen von Schlamm oder eines mehr oder weniger großen Teils der Trommelfüllung, beispielsweise Schließen der Ventile unter Kühlen des Stellgliedes entweder durch ein besonderes Kühlmedium oder durch auslaufendes Schleudermedium - sowie Restentleerungsventile zur vollständigen Entleerung oder Reinigung der Zentrifuge, wie dies insbesondere bei verderblichen, explosiblen und/oder radioaktiven Medien angezeigt ist, desweiteren ein Reinigen bei Produktwechsel ohne Abstellen der Maschine. Schließlich gehört die Verhütung von Betriebsausfällen zur Bestimmung dieses Betriebs, wozu in erster Linie Einrichtungen für den Überlastungsschutz Verwendung finden - wie Druckanpassungsvorrichtungen beispielsweise bei Fettausdehnungen der Schneckenlager, und zwar durch Volumenvergrößerung des Fettraumes mittels Kolbenverschiebung oder aber auch durch Entlastungsventile. Desweiteren dienen dieser Verhütung von Betriebsausfällen Einrichtungen zur Sicherung der Temperatur, und zwar im Trennraum als Ablaßventile für heiße Flüssigkeit, Gase oder auch Dämpfe und im Lagerbereich durch Ventile für die Zufuhr von Schmierstoff/Kühlflüssigkeit aus einen umlaufenden Reservoir oder von außerhalb der Trommel, z.B. bei unzulässiger Erwärmung eines Lagers in Folge Reibungerhöhung. Schließlich kann man Einrichtungen für den Drehmomentüberlastungsschutz vorsehen, die insbesondere eine Unterbrechung des Antriebsstranges der Schnecke z.B. bei Erwärmung durch Reibung hervorrufen, insbesondere durch eine ausrückbare Kupplung. Diese Aufzählung der Einrichtungen für die Bestimmung des Betriebs der Zentrifuge nach den vorerwähnten, grundsätzlichen Aufgabengebieten erhebt keinen Anspruch auf Vollständigkeit des Anwendungsbereiches der hier in Rede stehenden Stellglieder.

Das Betätigen von Steuereinrichtungen im Inneren einer Zentrifuge, d.h. an sich drehenden Teilen, gezielt von außen her ist schwierig, aufwendig bzw. nur unter bestimmten Betriebsbedingungen ausführbar. So kann man eine Steuerflüssigkeit über ein ortsfestes Zuführrohr aufgeben, die in eine Umlaufrinne (Umlauftaschen) des drehenden Zentrifugenbereichs übertritt und von dort aus unter abhängig von der Zentrifugendrehzahl auftretender Fliehkraft eine Steuerkraft, z.B. zur Betätigung eines Kolbens als Stellglied für eine Steuereinrichtung, ausübt. Eine gezielt druckbeaufschlagte und damit fliehkraftunabhängige Steuerkraft könnte man über eine Druckflüssigkeit aufbringen, die über eine Drehdurchführung von einer feststehenden Zuführleitung in eine drehende Druckleitung leiten kann, wobei die druckerhaltende und leckflüssigkeitsarme Drehdurchführung aufwendig ist - beispielsweise DE-OS 30 09 669.

So wurde beispielsweise zur Betätigung von Restentleerungsventilen - die nach einem Trennvorgang in der Trommel verbleibende Restflüssigkeit wird tunlichst entfernt, z.B. weil sie beim Abstellen der Zentrifuge in den Feststoffschacht ausgeworfen wird oder weil sie das Reinigen der Trommel erschwert - die von der Drehzahl der Zentrifuge abhängige, in radialer Richtung auf das Ventil wirkende Fliehkraft ausgenutzt, die gegen die Kraft einer radial nach innen gerichtet wirksamen Feder derart arbeitet, daß bei Betriebsdrehzahl durch die Fliehkraft gegen den Druck der Feder das Ventil geschlossen gehalten wird, während bei absinkender Drehzahl die Öffnung des Ventils erfolgt, beispielsweise GB-PS 614 501.

Beispiele für die Steuerung mit Hilfe von Steuerflüssigkeit, die über Ringtaschen am Zentrifugenrotor im freien Zulauf aufgegeben wird, sind Zentrifugentrommeln mit diskontinuierlichem Schlammaustrag. Diese sind in der Regel mit Ventilen oder Kolbenschiebern ausgestattet, die mittels der Steuerflüssigkeit während des Betriebes gezielt von außen her angesteuert werden. Unter dem Einfluß der Fliehkraft entwickelt die Steuerflüssigkeit hohe hydraulische Kräfte, die zur Betätigung der Ventile oder Kolbenschieber ausgenutzt werden - beispielsweise DE-OS 30 11 620.

Die Verstellmöglichkeit des Flüssigkeitsstandes in der Trommel während des Betriebes ist bei einer Vielzahl von Schleudermedien von entscheidender Bedeutung für das Trennergebnis und ermöglicht in vielen Fällen erst den Einsatz von Dekantern in diesem Bereich. Dies gilt insbesondere für Medien mit schwankender Zusammensetzung und mittels einer Schnecke schwer förderbaren Feststoffen. Es ist bekannt, für eine derartige Einstellbarkeit des Flüssigkeitsstandes in der Trommel bzw. der Teichtiefe im Trennraum der Zentrifuge eine verstellbare Schälscheibe zu verwenden, die allerdings sehr aufwendig ist und insbesondere bei großen Maschinen einen höheren Energiebedarf als der freie Überlauf benötigt. In vielen Fällen genügt eine Wehrdurchmesserverstellung von wenigen Millimetern, z.B. beim Anfahren von Dekantern mit sogenanntem Superpool, so daß der Verstellbereich einer verstellbaren Schälscheibe nicht ausgenutzt wird. Um das Durchbrechen der Flüssigkeit zur Feststoffseite hin zu verhindern, muß der Wehrdurchmesser zuerst auf einen größeren Wert eingestellt werden, um dann nach genügendem Feststoffaufbau vor dem Wehr für hohen Trockenfeststoffgehalt auf einen kleineren Wehrdurchmesser, d.h. auf Superpool, umgeschaltet zu werden. Bekannt ist ein solcher Dekanter - DE 37 28 901 -mit einer Umleitmöglichkeit für den Zentratablauf, so daß wahlweise die eine oder andere von zwei fest eingestellten Wehrscheiben wirksam ist. Diese Einrichtung arbeitet mit einer von Seperatoren her bekannten hydraulischen Kolbenschiebersteuerung.

Nachteilig ist bei diesen Vorgehensweisen die Abhängigkeit der Betätigung der jeweiligen Einrichtung von der Fliehkraft und damit der jeweils herrschenden bzw. gezielt einzustellenden Zentrifugendrehzahl und die Gefahr des Blockierens und Verschleißes von Ventilen bzw. Kolbenschiebern durch Ablagerungen angesichts der beschränkten drehzahlabhängigen Kraftunterschiede für den Schließ- und Öffnungsvorgang bzw. der hohe Aufwand für die Steuerung.

Der Erfindung liegt die Aufgabe zugrunde, Zentrifugen der in Rede stehenden Art zur Verfügung zu stellen, deren zu steuernde Einrichtungen zumindest zum Teil fliehkraftunabhängig gesteuert betätigt werden.

Ausgehend von einer Zentrifuge mit den eingangs genannten Merkmalen wird die Aufgabe erfindungsgemäß dadurch gelöst, daß die Steuerung der jeweiligen Einrichtung unter Einsatz eines temperaturabhängig seine Form ändernden Steuergliedes gestaltet ist, das wenigstens eine temperaturspezifische Formgebung aufweist.

Der erfindungsgemäße Einsatz eines temperaturabhängig seine Form ändernden Stellgliedes mit wenigstens einer temperaturspezifischen Formgebung für die Steuerung der jeweiligen Einrichtung eröffnet die Möglichkeit des Einsatzes einer neuen physikalischen Steuergröße, nämlich der Temperatur, die fliehkraftunabhängig ist. Diese Steuergröße kann dem Stellglied von außerhalb der Zentrifuge her gezielt aufgegeben werden, sie kann aber auch vom Temperaturzustand des Gemisches bzw. wenigstens einer der Komponenten des zu trennenden Gemisches oder der Zentrifuge abgeleitet und zur Aussteuerung des Stellgliedes eingesetzt werden. In letzterem Falle kann das Stellglied selbst zugleich als Temperatursensor wirksam sein.

Das Stellglied nimmt wenigstens eine temperaturspezifische Formgebung an, insbesondere für den Fall, daß die Temperatur, von der das Stellglied beaufschlagt wird, gezielt von außen durch ein erwärmtes gasförmiges oder flüssiges Medium oder von dem Gemisch oder der Zentrifuge her über einen gewissen Bereich ansteigt. Für diesen Fall, daß die Einnahme nur einer spezifischen Formgebung temperaturabhängig erfolgt, benötigt man für die Rückführung bei Temperaturen unterhalb des Schaltbereiches in die andere Formgebung (Ausgangszustand) eine zusätzliche Kraft, die mittels eines als Puffer angeordneten Federelementes (z.B. aus Federstahl) oder durch die Rotation der Zentrifuge als Fliehkraft zur Verfügung gestellt werden kann. Es ist aber auch möglich, das Stellglied sowohl auf Temperaturerhöhungen mit einer spezifischen Formgebung und auf Temperatursenkungen mit Einnahme zurück zu einer abweichenden Ausgangsformgebung reagierend auszubilden, wobei die eine der Formänderungsbewegungen im Gegensatz zu der anderen unter geringerer Kraftentfaltung erfolgen kann, so daß wiederum eine zusätzliche Feder oder Fliehkraft erforderlich sein kann.

Als Stellglieder dieser Art kommen Dehnstoffelemente - z.B. wachsgefüllte Kolben- Zylinder-Einrichtungen -, insbesondere aber Bimetallelemente und vor allem und hier besonders bevorzugt sogenannte Formgedächtnismetalle in Betracht.

In besonders bevorzugter Ausführung werden solche Stellglieder verwendet, deren Formänderung innerhalb eines im Verhältnis zum Betriebstemperaturbereich kleinen Steuertemperaturbereiches erfolgt. Damit erhält man eine Aussteuerung der jeweiligen von dem Stellglied betätigten Einrichtungen, die einem Schaltvorgang ähnelt. Dies ist in vielen Fällen erwünscht, insbesondere dann, wenn eine Änderung des Betriebes im Zuge des Anfahrens oder des Unterbrechens, der Überwachung oder dergleichen eine spontane Reaktion unter möglichst hoher Kraftentfaltung auslösen soll, so daß auch Verschmutzungen oder Verkrustungen der Ventile, Schieber oder dergleichen Stellgliedelemente nicht zu einem Blockieren führt. Ein solches schaltermäßiges Verhalten des Stellgliedes kann mit einem Bimetallelement ausgeführt werden, das zwei bistabile Schaltzustände aufweist, die durch einen temperaturabhängigen Verformungsscheitelwert voneinander getrennt sind. Auch ein hier besonders bevorzugt einzusetzendes Formgedächtnismetall genügt diesem schaltelementähnlichen Verhalten:

Formgedächtnismetalle - auch Memory-Legierungen genannt -erfahren bei Temperaturänderungen innerhalb eines eng begrenzten Temperaturbereiches eine Gefügeumwandlung (Austenit-Martensit) und ändern dadurch ihre Gestalt. So wird dem Formgedächtnismetall bzw. dem daraus gebildeten Stellglied bei austenitischem Gefüge eine bestimmte Formgebung vorgegeben, der gegenüber das Formgedächtnismetall bei niedrigerer Temperatur, beispielsweise Zimmertemperatur, unter martensitischen Gefügebedingungen in eine andere Gestalt verformt wird. Diesen Zustand könnte man angesichts der hier verwendeten Stellglieder als Ausgangsformgebung bezeichnen. Wird das Stellglied mit dieser Ausgangsformgebung erwärmt, so wird das Gefüge des Formgedächtnismetalls oberhalb einer bestimmten Temperatur wieder austenitisch, worauf das Bauteil nahezu vollständig seine ursprüngliche Gestalt wieder annimmt. Dieser Vorgang des Erinnerungsvermögens unter Wärmeeinfluß an eine bestimmte Formgebung kann als Einwegeffekt vorhanden sein, d.h. das Stellglied aus einem solchen Einwegeffekt-Formgedächtnismetall nimmt nur bei Temperaturerhöhung seine Ursprungsgestalt an, während die Rückführung in eine andere, nämlich die vorerwähnte Ausgangsformgebung, immer wieder durch äußere Kräfte hervorgerufen werden muß. Es gibt auch Formänderungsmetalle bzw. Memorylegierungen mit sogenanntem Zweiwegeffekt, d.h. sie nehmen sowohl eine spezifische Hochtemperaturformgebung als auch eine spezifische Niedertemperaturformgebung an, d.h. die Formänderung ist reversibel. Dabei ist jedoch der Übergang in die Niedertemperatur-Formgebung vielfach mit verhältnismäßig geringer Kraftentwicklung verbunden, so daß hier unterstützend Fremdeinwirkungen wie gespeicherte Federkräfte oder Fliehkräfte eingesetzt werden müssen, um den Übergang in die Niedertemperaturform zu erreichen. Die Phasenumwandlung solcher Formgedächtnismetall-Stellglieder erfolgt schlagartig bei Vorliegen der erforderlichen Temperaturverhältnisse, so daß die Geschwindigkeit der Formänderung letztlich durch die Geschwindigkeit der Wärmezufuhr oder -abfuhr bestimmt wird. Ein weiterer besonderer Vorteil dieser Formänderungsmetalle ist die große Arbeitsleistung pro Volumeneinheit, zumindest in Richtung der Einnahme der Formgebung bei austenitischem Gefüge, sowie die Möglichkeit, Sensor und Aktor in einem Bauteil zu vereinigen. Es gibt verschiedene Memory-Legierungen der in Rede stehenden Art, so beispielsweise Kupfer-Zink-Aluminium-Legierungen und Nickel-Titan-Legierungen, von denen die letzteren wegen ihrer Formänderungseigenschaften, der zulässigen Spannung und vor allem auch der Korrisionsbeständigkeit erfindungsgemäß bevorzugt Verwendung finden.

In weiterhin bevorzugter Ausführung ist das bzw. eines der entsprechend der zu steuernden Einrichtungen eingesetzten Stellglieder aus zwei oder mehreren parallel und/oder in Reihe angeordneten Formgedächtnismetallen gebildet. Damit kann man in Parallelschaltung die bei der Formänderung entwickelte Kraft erhöhen bzw. bei Reihenschaltung den Formänderungshub vergrößern. In beiden Fällen kann man bei unterschiedlichen Formänderungs-Temperaturbereichen auch ein gestuftes Formänderungsverhalten des gesamten so gebildeten Stellgliedes erreichen. In anderer Ausbildung kann das bzw. wenigstens eines der Stellglieder zwei oder mehrere hinsichtlich ihrer durch temperaturbedingten Gefügeänderungen erfolgenden Formänderungen bewegungsmäßig einander entgegenwirkend in Reihe und/oder parallel geschaltet miteinander verbinden, so daß sich im Zuge einer gestuften Temperaturerhöhung bei entsprechend unterschiedlichen Formänderungs-Temperaturbereichen ein erster Schaltschritt einstellen läßt, den man in einem darauffolgenden Schaltschritt wieder aufhebt oder modifiziert.

Als Rückstellkraft entgegen der Formänderung, die beim Übergang vom martensitischen in den austenitischen Zustand erfolgt, kann bei Stellgliedern aus Einwegeffekt-Memory-Legierungen die zentrifugendrehzahlabhängige Fliehkraft herangezogen werden, und zwar unterstützend auch bei Verwendung von Zweiwegeffekt-Memory-Legierungen Hierzu ist dann die Anordnung des Stellgliedes aus diesen Legierungen möglichst in radialer Richtung wirksam vorzusehen, was insbesondere bei in Längsrichtung wirksamen Formänderungen der Stellglieder in bezug auf radial zu betätigende Einrichtungen, vor allem im Mantelbereich vorgesehene Ventile, verwirklichbar ist. In anderer Ausführung und insbesondere bei solchen Hubbewegungen des Stellgliedes, die keine oder nur eine entsprechend geringfügige radiale Komponente aufweisen, ist eine Rückstellkraft für die Überführung des Stellgliedes in die Niedertemperaturform des Formgedächtnismetalles erforderlich, was vorzugsweise mit Hilfe einer Feder geschieht, die insoweit als Puffer angeordnet ist. Auch hier kommt die Verwendung von Einwegeffekt-Formänderungsmetallen in Betracht, wobei dann die Rückführung ausschließlich durch Federkraft erfolgt, oder aber die Verwendung von Zweiwegeffekt-Formgedächtnismetallen, bei denen die Rückführung zusätzlich unter der Kraft der Feder vorgenommen wird. Natürlich ist es auch möglich, unter Fliehkraft stehende Stellglieder zusätzlich mit Federkraft zu beaufschlagen.

Die Stellglieder aus Formgedächtnismetall sind vorzugsweise als Zugstab, Schraubenfeder, Torsionsstab oder Biegefeder ausgebildet.

Um von außerhalb der Zentrifuge her einen gezielten Steuerbefehl an das Stellglied zu geben, wird vorzugsweise ein entsprechendes flüssiges oder gasförmiges Heiz- und/oder Kühlsteuermedium aufgegeben, vorzugsweise über ein ortsfest gehaltenes Zugaberohr, das in einen ringförmigen Aufnahmekanal mündet, von dem aus das Medium unter zentrifugendrehzahlabhängiger Fliehkraft dem Stellglied unter radialer Strömungswegkomponente zugeführt wird und dieses umspült oder durch dieses hindurchgeleitet wird.

Für den Fall, daß Einrichtungen oder eine oder mehrere der insgesamt vorgesehenen Einrichtungen nicht gezielt von außen her ausgesteuert werden sollen, wird das zugehörige Stellglied derart angeordnet, daß es zugleich als Sensor für von der Zentrifuge und/oder der Zentrifugentrommelfüllung bedingte Temperaturen ausgebildet ist. Dies kann beispielsweise zur Erfassung der Temperaturänderung des entsprechenden Stellgliedes ausgenutzt werden, die bei Einleitung von Reinigungsflüssigkeit nach vorherigem Betrieb mit kaltem Schleudermedium erfolgt. Das Stellglied kann dann ein im Mantelbereich der Trommel vorgesehenes Ventil öffnen und die Reinigungsflüssigkeit abfließen lassen. Desweiteren kann das Stellglied mit einer Temperaturänderung beaufschlagt werden, die durch Kontakt mit auslaufendem Schleudermedium erfolgt. Weiterhin kann man zur Verhinderung von leckagebedingten Überlastungen von Dichtungen eines Lagerraumes, insbesondere des Schneckenlagerinnenraumes, diesen als Druckausgleichskammer ausbilden bzw. mit einer solchen in Verbindung bringen, deren Rauminhalt mittels eines in Kontakt mit dem Schmiermittel stehenden Stellgliedes bei Schmiermittel-Temperaturanstieg vergrößerbar ist, vorzugsweise mit Hilfe wenigstens eines in einem Hohlraum geführten Kolbens, an dessen dem Schmiermittel ausgesetzter Stirnseite das Stellglied - bevorzugt in Gestalt wenigstens eines schraubenfederförmigen Formgedächtnismetalls - angeordnet ist und an dessen anderer Stirnseite eine Rückstellfeder angreift. Das bei Anfahren der Zentrifuge zunächst höher viscose Schmiermittel neigt weniger dazu, über die Dichtungen nach außen zu gelangen, weshalb es tunlich ist, erst bei einer bestimmten Schmiermitteltemperatur bzw. -viscosität eine Vergrößerung des Lagerraumvolumens bzw. der Ausgleichskammer vorzunehmen, was aufgrund des Schalterverhaltens des Formgedächtnismetalles erreicht wird. Wichtiger ist jedoch, daß ab einem gewissen temperaturabhängig auftretenden Druck die Dichtungen stärker verschleißen und zerstört werden können. Durch Anordnung mehrerer paralleler Stellglieder und Kolben mit gestaffelter Temperaturabhängigkeit kann man eine gestufte Erweiterung des Kammervolumens erzielen, oder auch dadurch, daß man ein auf einen Kolben wirkendes Stellglied aus mehreren parallel oder in Reihe geschalteten Formgedächtnismetallen zusammensetzt, die unterschiedliche temperaturabhängige Schaltschwellen aufweisen und damit den Kolben im Zuge ansteigender Temperatur stufenweise in Richtung einer Vergrößerung des Kammervolumens verschieben.

Bevorzugte Anwendungen der Stellglieder mit zugehörigen Einrichtungen ergeben sich durch folgende Maßnahmen: Es sind Düsenöffnungen in der Zentrifugentrommel radial außen gelegen so angeordnet, daß durch diese Düsenöffnungen die Zentrifugentrommel entleerbar ist; die Düsenöffnungen sind im Dickschlammbereich der Zentrifugen derart angeordnet, daß durch diese Düsenöffnungen periodisch Dickschlamm aus der Zentrifugentrommel entleerbar ist; die Düsenöffnungen sind auf einem größeren Durchmesser angeordnet als ein in der Zentrifugentrommel vorgesehenes Überlaufwehr, so daß bei geöffneter Düsenöffnung sich ein Innendurchmesser des Flüssigkeitsspiegels einstellt, der größer ist als der durch das Überlaufwehr bestimmte Innendurchmesser. Dazu können die Düsenöffnunge zwischen zwei mit Abstand zueinander angeordneten Wehrscheiben angeordnet sein, wobei die zum Trennraum gerichtete Wehrscheibe einen größeren Innendurchmesser aufweist als die andere Wehrscheibe, so daß bei geöffneter Düsenöffnung sich der Flüssigkeitsinnendurchmesser nach der Wehrscheibe mit dem größeren Innendurchmesser und bei geschlossener Düsenöffnung nach der Wehrscheibe mit dem kleineren Innendurchmesser einstellt. Andererseits können in radialer Richtung wirksame Stellglieder vorgesehen sein, insbesondere als temperaturabhängig längenveränderlicher Stab oder Hohlstab ausgebildet, die jeweils an eine gegenüber einer zugehörigen Ablauföffnung etwa radial verschiebbar gelagerte Wehrplatte angeschlossen sind. Mit diesen Maßnahmen der Wehrhöhen- und damit Teichhöhenverstellung im Trennraum der Zentrifuge kann man schwer trennbare Gemische handhabbarer gestalten, insbesondere bei Schlämmen und dergleichen, die für den Abtransport des Feststoffes zunächst eine gewisse Feststoffansammlung benötigen.

Um den Formänderungseffekt auch über eine längere Zeit bzw. eine Vielzahl von Formänderungen sicherzustellen, empfiehlt es sich, Formänderungsmetalle (Shape-Memory-Legierungen) im Augenblick der Umwandlung vom austenitischen in den martensitischen Zustand mit einer Rückstellkraft zu beaufschlagen, und zwar entsprechend einer Spannung von mindestens 30 N/mm. Da nicht sichergestellt ist, daß bei der Gefügeumwandlung von Austenit in Martensit eine entsprechende Fliehkraft vorhanden ist, die dieser Spannung entspricht - eine Maschine der hier in Rede stehenden Art kann vor der Gefügeumwandung zum Stillstand kommen -, kann es für viele Anwendungsfälle ratsam sein, einen Kraftspeicher, beispielsweise eine Feder, einzubauen, die unabhängig von der Fliehkraft für die entsprechende Rückstellkraft sorgt. Im übrigen können Bauteile aus Formgedächtnislegierungen auch nur über Teilbereiche trainiert werden, so daß nur bestimmte Bereiche dieser Bauteile an der Formänderung teilnehmen.

Aufgrund ihrer Eigenschaft Sensor und Aktor in einem Bauteil zu vereinen, sind Stellglieder aus Formänderungsmetallen gerade dort vorteilhaft einsetzbar, wo der Schaltvorgang nicht durch Fremdbeheizung oder Fremdkühlung, sondern direkt durch die Produkttemperatur ausgelöst wird. Hier kann man sich insbesondere selbstregelnde Auslaßmechanismen für Schlamm oder Zentrat vorstellen, bei denen durch die beim Austritt durch enge Düsen auftretende Reibungswärme der Auslaßquerschnitt automatisch verändert wird. Dazu ein Beispiel: Auslaßöffnung klein bedeutet verringerten Durchsatz, mündet in Erwärmung, führt zu Umwandlung in Austenit, wodurch die Auslaßöffnung vergrößert wird oder aber die Auslaßöffnung ist groß, wodurch der Durchsatz groß ist, so daß eine Kühlung stattfindet, die eine Umwandlung in Martensit zur Folge hat, wodurch die Öffnung verkleinert wird.

Die für die Formänderung der Stellglieder erforderliche Wärmezufuhr oder auch Kühlung muß für den Fall der Fremdsteuerung nicht unbedingt durch flüssige oder gasförmige Heizmedien erfolgen, es ist auch denkbar, hierzu Reibungswärme zur Verfügung zu stellen, die durch entsprechende Fahrweise der Maschine erzeugt wird, beispielsweise also durch Veränderung der Differenzdrehzahl zwischen Schnecke und Trommel eines Dekanters, durch Drosseln des Ablaufes der verstellbaren Wählscheibe und dergleichen mehr. Darüberhinaus kann man sich Chemikalien mit endothermer oder exothermer Reaktion für die wärmetechnische Beeinflussung der Stellglieder vorstellen.

In bevorzugter Ausführung finden die vorstehenden Maßnahmen bei Vollmantelschneckenzentrifugen oder bei Tellerzentrifugen statt.

Bevorzugte Ausführungsformen der Erfindung ergeben sich aus den Unteransprüchen, insbesondere im Zusammenhang mit den in der Zeichnung wiedergegebenen Ausführungsbeispielen, deren nachfolgende Beschreibung die Erfindung näher erläutert. Es zeigen
- Figur 1: einen längs der Achse einer Zentrifuge geführten Längsschnitt durch den deckelstirnseitigen Endbereich einer Zentrifuge;
- Figuren 2 bis 8: Halbschnitte nach dem Vorbild der Schnittdarstellung gemäß Figur 1 durch Ausführungsformen mit steuerbaren Ventileinrichtungen;
- Figur 9: einen Halbschnitt nach dem Vorbild des Schnittes gemäß Figur 1 mit einer Wehrplatten-Verstelleinrichtung;
- Figur 10: einen Halbschnitt nach dem Vorbild des Schnittes gemäß Figur 1 zur Volumenänderung des Schmiermittelraumes eines Schneckenlagers.

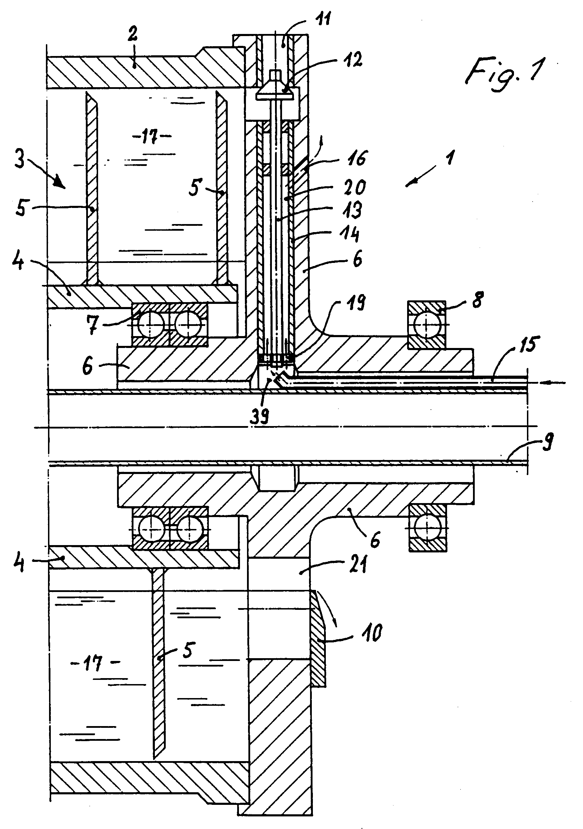

In den Beispielen nach den Figuren 1 bis 10 ist jeweils eine Vollmantelschneckenzentrifuge 1 insoweit bekannter Bauart zugrundegelegt. Diese Zentrifuge weist eine Zentrifugentrommel (Mantel) 2 auf, die in nicht dargestellter Weise ortsfest über Lager 8 drehbar gehalten ist und zu deren Rotationsachse koaxial eine Schnecke 3 mit einer Nabe 4 angeordnet ist, deren an der Nabe angeordnete Schneckenwendel 5 bis nahe an die Innenwandung der Zentrifugentrommel 2 heranreicht. Die Zentrifugentrommel ist an ihrem dem nicht dargestellten Feststoffaustrag abgewandten Stirnseite mit einem Trommeldeckel 6 versehen, zwischen dessen zum Zentrifugeninneren hin abragenden Nabenansatz und der Schneckennabe 4 ein diesem stirnseitigen Ende der Zentrifuge zugeordnetes Schneckenlager 7 angeordnet ist. Durch die Nabe des Trommeldeckels 6 hindurch ragt ein in nicht näher dargestellter Weise ortsfest gehaltenes Einlaufrohr 9 hinein, durch welches das zu trennende Gemisch in nicht dargestellter Weise über eine Öffnung in der Trommelnabe in den Trennraum der Zentrifuge eingegeben wird, der von der Innenwandung der Trommel 2, der Außenwandung der Nabe 4, den Wandungen der Schneckenwendel 5 und der Innenwandung des Trommeldeckels 6 begrenzt ist. Der Trommeldeckel 6 ist von über den Umfang gleichmäßig verteilten Ablauföffnungen 21 durchbrochen, durch welche eine abgetrennte Phase des Gemisches, insbesondere eine Flüssigkeitsphase eines Feststoff-Flüssigkeitsgemisches, aus der Zentrifuge austritt. Den Ablauföffnungen 21 ist eine Wehrscheibe 10 zugeordnet, deren Innendurchmesser die sich während des Betriebes einstellende Höhe des Teiches 17 des Gemisches bestimmt. Die Trommel wird in hohe Umdrehungszahlen versetzt, die in der Trommel angeordnete Schnecke läuft mit nur geringer Differenzdrehzahl zur Trommel derart um, daß die Schneckenwendel 5 den sich an der Innenwandung der Trommel 2 absetzenden Feststoff - die schwerere Phase des zu trennenden Gemisches - zu dem anderen stirnseitigen Ende bzw. den dort vorgesehenen Austragöffnungen transportiert, ggfs. über eine sich konisch verengende Trockenstrecke, wie dies von Vollmantelschneckenzentrifugen der hier dargestellten Art bekannt ist.

In dem Beispiel nach den Figuren 1 bis 5 sind Düsenöffnungen 11 im Trommelmantel oder aber im Deckel auf der Höhe des Trommelmantels vorgesehen, so daß durch diese Düsenöffnungen 11 vor allem eine Restentleerung der Zentrifuge erfolgen kann. Desweiteren ist eine periodische Dickschlammabfuhr durch solche Düsenöffnungen 11 möglich. Gemäß Figur 1 ist der Düsenöffnung 11 ein Einstellorgan 12 in Gestalt eines konuskegelförmigen Ventilkörpers als Schließelement zugeordnet, das an dem radial äußeren Ende eines stabförmigen Stellgliedes 13 festgelegt bzw. ausgebildet ist, welch letzteres aus einem temperaturabhängig längenveränderlichen Formgedächtnismetallstabes ausgebildet ist. Das stabförmige Stellglied 13 ist mit Abstand von einem Rohr hier wärmeisolierend ausgebildeten 14 umgeben, so daß ein rohrförmiger Hohlraum 20 zwischen einem Großbereich der Mantelfläche des Stellgliedes 13 und der Innenmantelfläche des Rohres 14 entsteht, der zur Zentrifugenrotationsachse hin gesehen in einem wannenförmigen Ringraum 39 mündet - 19 -, in welchen die Ausgangsöffnung eines Zufuhrrohres mündet, das wie das Einlaufrohr 9 ortsfest angeordnet ist und der Einleitung eines flüssigen oder gasförmigen Heiz- und/oder Kühlmediums dient. Im radial äußeren Ende des Ringraumes zwischen dem Stellglied 13 und dem Rohr 14 ist in dem Trommeldeckel 16 eine Austrittsöffnung 16 für dieses Medium vorgesehen, so daß beispielsweise ein durch das Zufuhrrohr 15 aufgegebenes Heizmedium abfließt und durch ein Kühlmedium ersetzt werden kann.

Das Stellglied 13 kann aus einem stabförmigen Formgedächtnismetall mit Einwegcharakteristik oder Zweiwegcharakteristik gebildet sein, jedenfalls derart, daß bei Zufuhr von Wärme und Überschreiten der Schalttemperatur - und damit der Rückbildung von Martensit in Austenit eine Verkürzung in Stablängsrichtung erfolgt und das Einstellorgan 12 von der Mündung der Öffnung 11 radial nach innen hin entfernt wird, so daß die im Trennraum vorhandene Restflüssigkeit durch die Düsenöffnung 11 entweichen kann. Soll die Düsenöffnung 11 wieder verschlossen werden, so wird die Heizung des Stellgliedes durch das Heizmedium unterbrochen bzw. durch ein Kühlmedium in niedrige Temperaturen zurückgeführt, unter denen eine in die Längsrichtung gerichtete Verformung des stabförmigen Stellgliedes unter äußeren Kräften oder mit Unterstützung solcher äußerer Kräfte stattfinden kann, was hier unter Fliehkraftbeeinflussung bei entsprechender Zentrifugendrehzahl erfolgt.

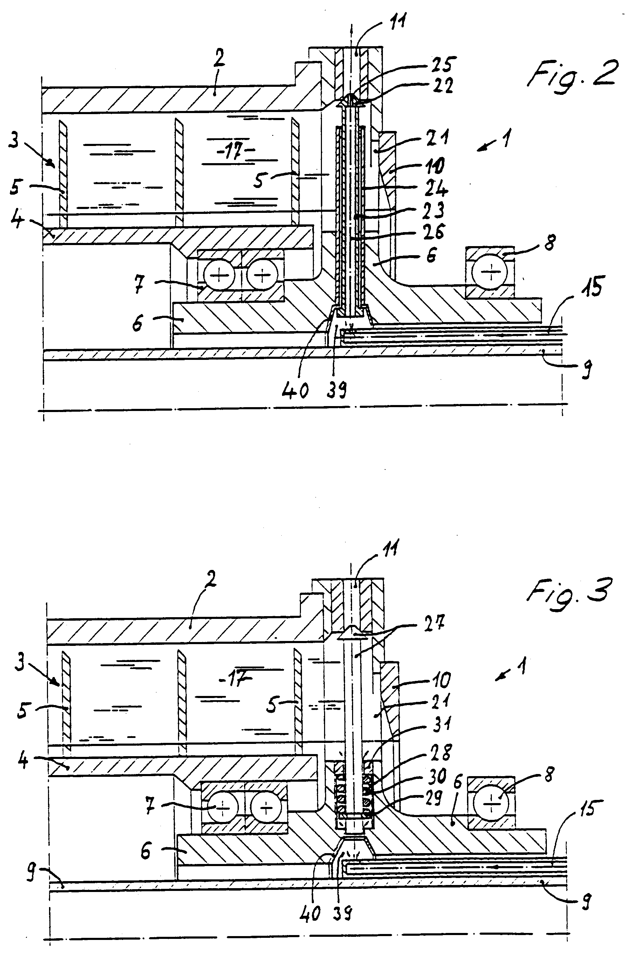

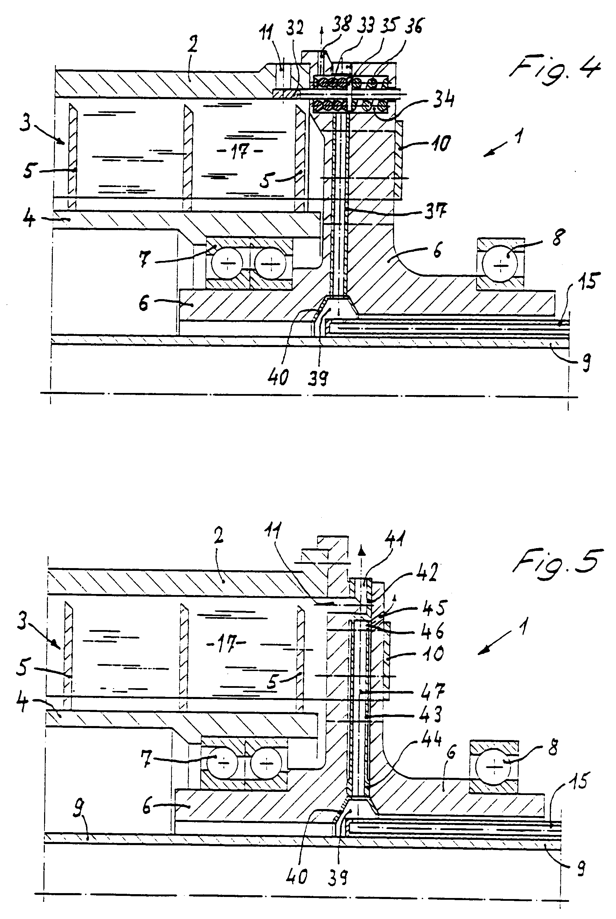

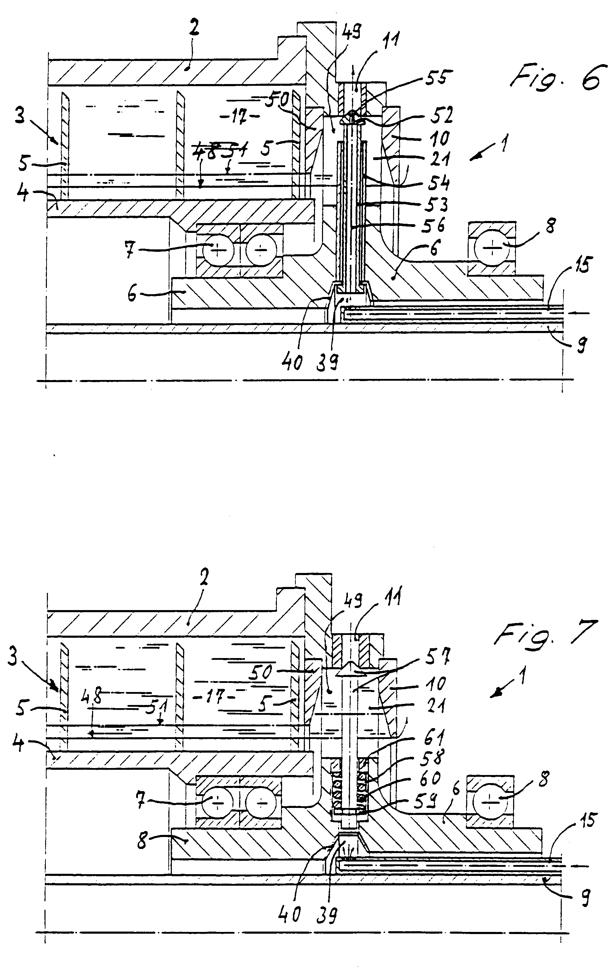

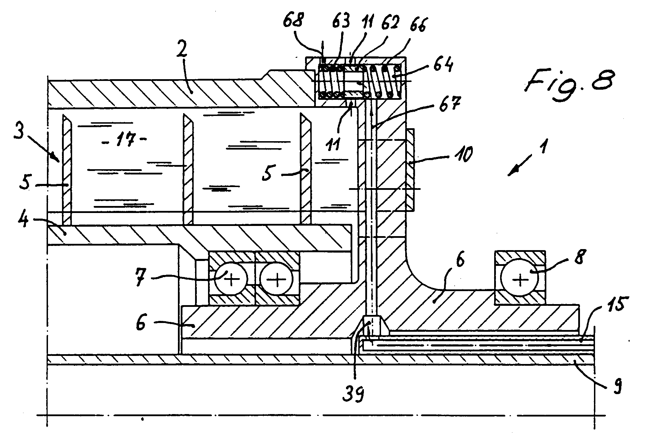

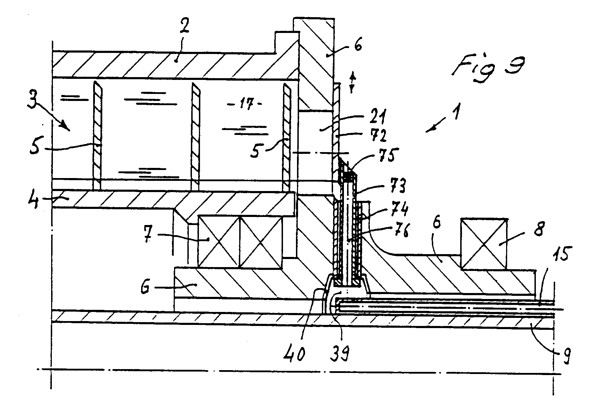

Bei dem Beispiel gemäß Figur 2 ist eine vergleichbar an dem Deckel in Höhe des Trommelmantels 2 angeordnete Düsenöffnung 11 mit Hilfe eines Einstellorgans 22 steuerbar, das wiederum die Gestalt eines konusförmigen Ventilkegels aufweist. Dieses Einstellorgan ist einstückig ausgebildet mit bzw. befestigt an einem rohrförmigen Stellglied 23 aus einem Formgedächtnismetall, das bei Übergang von Martensit in Austenit-Gefüge eine in seiner Rohrlängsrichtung erfolgende Verkürzung erfährt, also unter entsprechender Beheizung. Auch dieses Stellglied 24 ist von einem Führungsrohr 24 umgeben und in dessen Längsrichtung im radial äußeren Ende des Führungsrohres 24 geführt. Der Hohlraum des Stellgliedes 23 mündet in einen wie beim Beispiel gemäß Figur 1 vorgesehenen Ringraum 39, in welchen das Zufuhrrohr 15 für gasförmiges oder flüssiges Heiz- oder Kühlmedium mündet, das von außen zugeführt wird. Das Medium tritt also vom Rohr 25 über den Ringraum 39 in den stabförmigen Hohlraum 26 des rohrförmigen Stellgliedes 23 über und verläßt diesen im radial äußeren Endbereich durch eine Austrittsöffnung 25, die das ventilkegelförmige Einstellorgan 25 axial durchtritt, so daß das Medium in die Düsenöffnung 11 übertreten kann. Die Arbeitsweise ist derjenigen vergleichbar, die im Zusammenhang mit Figur 2 geschildert wurde und dient insoweit auch denselben Zwecken.

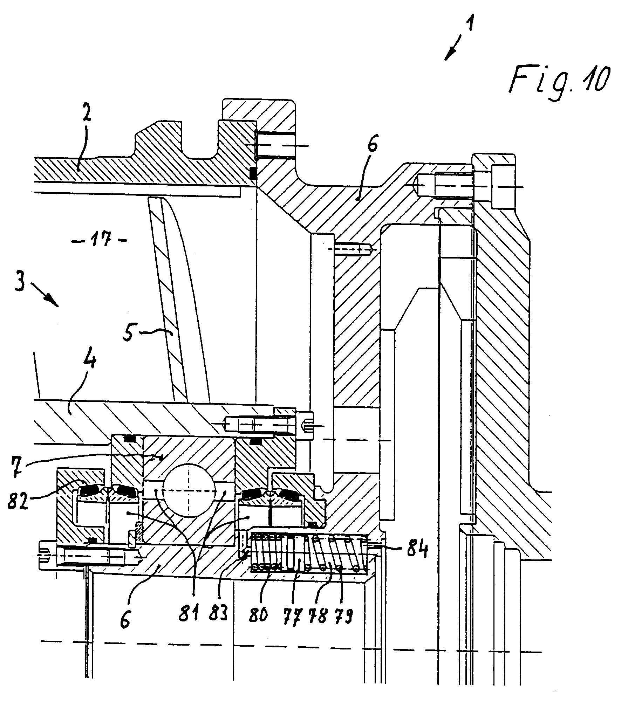

Bei dem Ausführungsbeispiel gemäß Figur 3 ist die in gleicher Weise wie in Figur 2 angeordnete Düsenöffnung 11 durch ein Einstellorgan 27 nach Art eines kegeligen Ventilkörpers zu schließen und zu öffnen, der an einem sich radial zur Rotationsachse der Zentrifuge hin erstreckenden Stab angeordnet ist, der in seinem radial inneren Endbereich eine Auskragung 29 - hier durch einen Sprengring gebildet - aufweist und der mit großem Spiel durch einen Ringeinsatz 31 hindurchgeführt ist, welcher Ringeinsatz 31 derart an der Nabe des Trommeldeckels 6 festgelegt ist, daß zwischen ihm und dem Kragen 29 ein ringförmiger Hohlraum 28 entsteht, in den ein Stellglied 30 in Formgebung einer Schraubenfeder eingesetzt ist. Dieses schraubenfederförmige Stellglied 30 aus Formgedächtnismetall stützt sich an den einander zugewandten Stirnflächen des Kragens 29 und des Ringeinsatzes 31 ab. Oberhalb des Hohlraumes 28 steht dieser mit einem Ringraum 39 in Verbindung, in den wie bei den anderen Ausführungsbeispielen die Ausgangsöffnung eines Zufuhrrohres für gasförmiges oder flüssiges Heiz- oder Kühlmedium mündet. Dieses Kühlmedium tritt also vom Zufuhrrohr 15 über den Ringraum 39 in den Hohlraum 28 über und verläßt diesen über den durch das Spiel gebildeten Ringspalt zwischen dem Ringeinsatz 31 und der Mantelfläche des stabförmigen Bereiches des Einstellorganes 27 in den Trennraum über. Das Formgedächtnismetall des Stellgliedes 30 weist bei austenitischem Gefüge eine temperaturspezifische Formgebung auf, die in axialer Richtung der Schraubenfedergestalt länger ist, als die in Figur 3 dargestellte Ausdehnung. Wird also ein Heizmedium zugeführt und damit das schraubenfederförmige Stellglied 30 über den Schwellwert beheizt, so daß sich das martensitische Gefüge in austenitisches Gefüge umwandelt, so drückt das Einstellglied 30 gegen den Kragen 29 und hebt damit das Einstellglied von der Düsenöffnung 11 ab, während bei Abkühlung - ggfs. durch Zufuhr eines Kühlmediums - diese Formgebung unter Bildung martensitischem Gefüge aufgrund der zentrifugendrehzahl abhängig auftretenden Fliehkraft in den zeichnerisch wiedergegebenen Zustand zurückgeht, in der das Einstellorgan 27 mit seinem kegelförmigen Ventilkörper die Düsenöffnung 11 verschließt. Damit hat man eine dritte Ausführungsform in der Arbeitsweise und den Einsatzbereichen, wie im Zusammenhang mit Figur 1 geschildert.

Figur 4 zeigt die Anordnung einer Düsenöffnung 11 im Bereich des Mantels der Zentrifugentrommel 2, deren Eingangsöffnung ein Schließ-Öffnungs-Einstellorgan 32 in Gestalt eines Flachschiebers zugeordnet ist, der mit einem Betätigungsbereich einen Hohlraum 34 durchgreift und innerhalb des Hohlraumes einen ringkolbenartigen Flachschieberkragen 35 aufweist. Zwischen der der Düsenöffnung 11 zugewandten stirnseitigen Berandung des Hohlraumes 34 und der dieser zugewandten Stirnseite des Flachschieberkragens 35 ist ein Stellglied 33 in Gestalt eines schraubenfederförmigen Formgedächtnismetalls eingesetzt, während sich zwischen der der Düsenöffnung 11 abgewandten Stirnseite des Hohlraumes 34 und der dieser zugewandten Stirnfläche des Flachschieberkragens 35 eine übliche Schraubenfeder 36 eingesetzt ist. Der Teil des Hohlraumes 34, in dem sich das Stellglied 33 befindet, ist über ein radial verlaufendes wärmeisolierendes Zuführrohr 37 mit einem an dessen radial inneren Ende mündenden Ringraum 39 verbunden, in den - wie bei den vorbehandelten Ausführungsformen - ein ortsfestes Zuführrohr 15 für ein gasförmiges oder flüssiges Heiz- und/oder Kühlmedium mündet. Entsprechend der Darstellung in diesem Ausführungsbeispiel mit von dem Einstellorgan 32 verschlossener Düsenöffnung 11 weist das Stellglied 33 die Gestalt auf, die es nach Verformung von außen her durch Bildung martensitischem Gefüge einnimmt und die von der Funktion her hier als Ausgangsform bezeichnet werden kann. Soll die Düsenöffnung 11 geöffnet werden, so wird Heizmedium durch das Rohr 15, den Ringraum 39 und das Zuführrohr 37 in denjenigen Bereich des Hohlraumes 34 eingegeben, in dem sich das Stellglied 33 befindet und aus dem das Heizmedium durch eine radial nach außen geführte Austrittsöffnung 38 ausgeführt werden kann. Damit wird das Stellglied 33 beheizt und dehnt sich durch Umwandlung des martensitischen Gefüges in austenitisches Gefüge in Achsrichtung der schraubenfederförmigen Gestalt derart aus, daß es seine bei austenitischem Gefüge auftretende temperaturspezifische Formgebung einnimmt. Aufgrund dieser Ausdehnung wird über den Flachschieberkragen 35 das achsparallel zur Rotationsachse der Zentrifuge verschiebbar gelagerte Einstellorgan 32 gegen die Kraft der Feder 36 verschoben und die Düsenöffnung 11 freigegeben. Fällt die Temperatur wieder ab, ggfs. durch Eingabe eines Kühlmediums über denselben Weg wie das Heizmedium, so kann unterhalb eines bestimmten Temperaturschwellwertes sich unter der Kraft der Feder 36 und Bildung von Martensit wieder in die in der Figur 4 dargestellte Ausgangsform zurückbewegen, so daß das Einstellorgan 32 die Düsenöffnung 11 verschließt. Es handelt sich also bei Figur 4 um eine weitere Ausführungsform der im Zusammenhang mit Figur 1 bereits geschilderten Arbeitsweise und der Verwendungsmöglichkeiten.

Figur 5 zeigt eine weitere Variante, bei der eine koaxial zur Rotationsachse der Zentrifuge durch den Trommeldeckel 6 geführte Düsenöffnung 11, deren Ausgangsöffnung mit Hilfe eines als Drehschieberventil ausgebildeten Einstellorgans 42 geöffnet und geschlossen werden kann. Im geöffneten Zustand mündet der Ausgang der Düsenöffnung 11 in einen Drehschieberausgang 41 und ist so für den Ablauf aus dem Trennraum frei. Wird das Einstellorgan demgegenüber um seine radial verlaufende Längsachse gedreht, so wird der Ausgang der Düsenöffnung 11 verschlossen. Diese Drehung wird durch ein rohrförmiges Einstellglied 43 bewirkt, an dessen radiales Ende das Einstellorgan 42 angeschlossen ist und das als hohler Torsionsstab aus Formgedächtnismetall ausgebildet ist. Das als hohler Torsionsstab ausgebildete Stellglied 43 verläuft hinsichtlich seiner Rohrlängsachse in radialer Richtung und ist an seinem radial inneren Ende an dem Trommeldeckel 6 festgelegt - 44 -, während das radial äußere Ende frei drehbar mit dem Drehschieber-Einstellorgan 42 in verdrehfester Verbindung steht. Der stabförmige Hohlraum 47 des rohrförmigen Einstellgliedes 43 steht an seinem radial inneren Ende mit einem Ringraum 39 in Verbindung, in welchen in bereits geschilderter Weise die Austrittsöffnung eines Zuführrohres für gasförmiges oder flüssiges Kühl- bzw. Heizmedium mündet. Die Wandungen des Ringraumes 39 sind - wie auch bei anderen Ausführungsformen - mit einer Wärmeisolierung 40 versehen, um einen zu großen Wärmeabfluß in den Nabenbereich des Trommeldeckels 6 zu verhindern. An seinem radial äußeren Ende steht der stabförmige Hohlraum 47 des Stellgliedes 43 über eine schlitzförmige oder über einen Ringraum arbeitende austenitischen temperaturspezifischen Öffnung 46, mit einer Austrittsöffnung 45 in Verbindung, so daß das Heiz- bzw. Kühlmedium aus dem Hohlraum abgeführt werden kann. In der wiedergegebenen Darstellung befindet sich das Stellglied in seiner austenitischen temperaturspezifischen Formgebung, in der Flüssigkeit aus dem Trennraum über die Düsenöffnung 11 und den Drehschieberausgang 41 abgeführt werden kann. Soll dies verhindert werden, so wird über das Zuführrohr 15, den Ringraum 39 und den stabförmigen Hohlraum 47 des Stellgliedes 43 Kühlmedium zugeführt oder eine entsprechende Abkühlung abgewartet, worauf nach Unterschreiten eines bestimmten Temperaturschwellwertes und ggfs. unter Zuhilfenahme einer nicht dargestellten Torsionsfeder unter Ausführung einer Torsionsbewegung, die sich auf das Einstellorgan 42 überträgt, das Formgedächtnismetall des Stellgliedes 43 in seine Ausgangsform übergeht. Dies mündet in einer Drehung des Einstellorgans 42 derart, daß der Ausgang der Düsenöffnung 11 verschlossen wird. Bei Erhöhung der Temperatur bzw. Zuführung eines entsprechenden Heizmediums nimmt das Stellglied 43 in Gestalt eines hohlen Torsionsstabes seine temperaturfixierte Formgebung wieder ein, in der wie in Figur 5 gezeigt die Düsenöffnung mit dem Drehschieberausgang 41 in Verbindung steht. Der Torsionsstab könnte auch aus zwei radial hintereinandergeschalteten Abschnitten bestehen, deren einer bei einer niedrigeren ersten Erwärmung seine temperaturspezifische Gestalt annimmt, während der andere Abschnitt bei einer höheren Temperatur seine temperaturspezifische Formgebung einnimmt, wobei die Anordnung so getroffen werden kann, daß bei der Erreichung des ersten Wärmeschwellwertes die Düsenöffnung 11 verschlossen und bei Erreichen des zweiten Schwellwertes diese wieder geöffnet wird. Vom Einsatzbereich her wird auf die Ausführungen zu den vorstehenden Ausführungsbeispielen verwiesen.

Das Ausführungsbeispiel gemäß Figur 6 zeigt neben der Anordnung eines axial äußeren Wehres 10 mit verhältnismäßig keinem Innendurchmesser 48 ein weiteres Wehr 50, das im axial zum Innenraum der Zentrifuge hin gelegenen Bereich des Trommeldeckels 6 angeordnet ist und einen größeren Innendurchmesser 51 aufweist. In dem Bereich zwischen den beiden Wehren 10 und 50 ist ein Hohlraum - 49 - ausgebildet, der hinsichtlich des äußeren Wehres 10 mit den Ablauföffnungen 21 vergleichbar ist. Dieser Hohlraum mündet in eine Düsenöffnung 11 in einem Mantelabschnitt des Trommeldeckels 11. Dieser Düsenöffnung ist als Öffnungs- und Schließorgan ein als Ventilkörper ausgebildetes Einstellorgan 52 zugeordnet, das an ein sich radial erstreckendes rohrförmiges Stellglied 53 aus Formgedächtnismetall angeschlossen ist, welches Rohr mit Abstand von einem Führungsrohr 54 durchgriffen ist. Der stabförmige Hohlraum 56 des Stellgliedes 53 dient der Durchführung von über ein feststehendes Zuführungsrohr 15 und einen Ringraum in vorgeschilderter Weise zugeführtes Heiz- bzw. Kühlmedium, das den stabförmigen Hohlraum 56 an seinem radial äußeren Ende durch eine Austrittsöffnung 55 verläßt, die in dem kegelförmigen Einstellorgan 52 axial angeordnet ist, so daß das Medium durch die Düsenöffnung 11 abgeführt werden kann. Die Arbeitsweise des Stellgliedes und des Einstellorganes ist dieselbe, wie im Zusammenhang mit Figur 2 geschildert wurde. Mit Hilfe des Stellgliedes 53 und damit des zu öffnenden und zu schließenden Einstellorgans 52 läßt sich bestimmen, ob die Tiefe des Teiches 17 im Trennraum der Zentrifuge sich nach dem kleineren Innendurchmesser 48 der Wehrscheibe 10 - Düsenöffnung 11 ist geschlossen, Flüssigkeit wird über das Wehr 10 abgeführt - oder nach dem größeren Durchmesser des Wehres 50 richtet - Düsenöffnung 11 ist freigegeben, die Flüssigkeit wird aus dem Trennraum über das Wehr 50 und durch die Düsenöffnung 11 abgeführt -.

In Figur 7 ist eine andere Ausführungsform für die Arbeitsweise bzw. den Einsatzzweck nach Schilderung des Beispielses gemäß Figur 6 wiedergegeben. Hier ist die Düsenöffnung mit einem ventilkörperförmigen Einstellorgan 57 versehen, das in ein stabförmiges Betätigungsteil mündet, welches durch einen Hohlraum 58 geführt ist und an seinem radial inneren Endbereich einen Kragen 59 aufweist. Das stabförmige Betätigungsteil durchgreift radial weiter außen einen Ringeinsatz 61, der an dem Trommeldeckel festgelegt ist. In dem Hohlraum 58, der zwischen dem Kragen 59 und dem Ringeinsatz 61 gebildet ist, befindet sich ein schraubenfederförmiges Stellglied 60 aus Formgedächtnismetall, dessen Aussteuerung und damit die Arbeitsweise des Ventils derjenigen entspricht, die im Zusammenhang mit dem Ausführungsbeispiel gemäß Figur 3 geschildert wurde.

In Figur 8 ist zu vergleichbarem Zwecke eine ähnliche zu steuernde Einrichtung wie in Figur 4 vorgesehen. Dort ist das Einstellorgan 62 für die auf Höhe des Trommelmantels 2 im Trommeldeckel 8 vorgesehene Düsenöffnung 11 nicht als Flachschieber, sondern als hohler Ringkolben ausgebildet, der in einem Hohlraum 64 parallel zur Rotationsachse der Zentrifuge verschiebbar gelagert ist. Zwischen der dem Trommelmantel 2 benachbarten Stirnfläche des Hohlraumes 64 und der dieser zugewandten Stirnfläche des Einstellorgans 62 ist das Stellglied 63 in Gestalt eines schraubenfederförmigen Formgedächtnismetalles angeordnet, während zwischen der Stirnwand des Hohlraumes 64, die dem Trommelmantel 2 abgewandt angeordnet ist, und der dieser gegenüberliegenden Stirnfläche des Stellgliedes 62 eine übliche Schraubenfeder 66 eingesetzt ist. In dem Hohlraum 64 mündet ein radial verlaufender Kanal 67 für die Zuführung des Heizmediums, der in einen Ringraum 39 mündet, welcher mit der Austrittsöffnung eines Zuführrohres 15 in bereits geschilderter Weise in Verbindung steht, so daß gasförmiges oder flüssiges Heizmedium in den Hohlraum 64 und durch die Höhlung des ringkolbenförmigen Einstellorgans 62 in den Bereich des Stellgliedes 63 gelangt und von dort aus durch eine Austrittsöffnung 68 abgeführt werden kann. Die Aussteuerung des Stellgliedes 33 und damit die Einstellung des ringkolbenförmigen Einstellorgans 62 geschieht in vergleichbarer Weise, wie im Zusammenhang mit Figur 4 geschildert. Auch der Einsatzzweck ist den Ausführungen zu Figur 1 vergleichbar. Zur Abkühlung des Stellgliedes dient das durch die Öffnung 11 austretende Schleudermedium.

In Figur 9 ist das den Ablauföffnungen 21 für die Flüssigkeitsphase des zu trennenden Gemisches zugeordnete Wehr in einzelne Wehrplatten 72 unterteilt, die radial verschiebbar an dem Trommeldeckel 6 gelagert sind. An diesen Wehrplatten 72 greift jeweils das radial äußere Ende eines unter dem Formgedächtnismetalleffekt längenveränderlichen rohrförmigen Stellgliedes 73 fest an, das radial innen an dem Trommeldeckel 6 abgestützt und von einem Führungsrohr 74 umgeben ist. Im radial äußeren Bereich des als Steuermediumkanal 76 dienenden Hohlraumes des rohrförmigen Stellgliedes 73 ist eine demgegenüber verengt ausgebildete Austrittsöffnung 75 vorgesehen, durch die das über das Zuführrohr 15 und den Ringraum 39 durch den Steuermediumkanal 76 strömende Heiz- bzw. Kühlmedium abgeführt werden kann. Im Falle der Aufgabe von Heizmedium und damit Übergang von Martensit in Austensit verkürzt sich das rohrförmige Stellglied 73, so daß die zugehörige Wehrplatte nach radial innen versetzt wird. Bei Unterschreiten der Umwandlungstemperatur bzw. Zuführung eines entsprechenden Kühlmediums wird diese dem Austenitgefüge eigene temperaturspezifische Formgebung wieder aufgegeben, so daß unter Fliehkraft oder einer nicht dargestellten Pufferfeder das Rohr wieder radial verlängert wird und damit die Wehrplatte einen größeren Innendurchmesser einnimmt. Auf diese Weise läßt sich von außen her gezielt temperaturabhängig gesteuert die Höhe des Teiches 17 im Trennraum der Zentrifuge bestimmen. Auch hier sind durch entsprechende Serien- oder Parallelschaltung von Formgedächtnismetallen stufenweise stattfindende Änderungen möglich. Soll der Betrieb mit großem Wehrdurchmesser nur kurzfristig erfolgen, so wird zu diesem Zweck das Stellglied 73 mit Kühlmittel beaufschlagt, während der übrige Betrieb aufgrund der dann herrschenden Betriebstemperatur das Formgedächtnismetall in die austenitische, temperaturspezifische Formgebung überführt und damit den Wehrdurchmesser verringert.

Das Ausführungsbeispiel gemäß Figur 10 zeigt den Einsatz eines Stellgliedes 80 aus schraubenfederförmigem Formgedächtnismetall zur Entlastung des Schmiermitteldruckes bei zunehmender Erwärmung und sich damit änderndem Volumen und ändernder Viscosität des Schmiermittels. Der Schmiermittelraum 81 des Schneckenlagers 7 ist mit Dichtungen 82 abgedeckt und mündet - 83 - in einen als Ausgleichsraum dienenden Hohlraum 78, in welchen ein kolbenförmiges Einstellorgan parallel zur Rotationsachse der Zentrifuge verschiebbar eingesetzt ist. in den an den Schmiermittelraum 81 angeschlossenen Bereich des Hohlraumes 78 ist das schraubenfederförmige Stellglied 80 eingesetzt, also zwischen der schmiermittelraumseitigen Stirnwand des Hohlraumes 78 und der gegenüberliegenden Stirnwand des als Kolbenscheibe ausgebildeten Einstellorgans 77. Der diesem Raum abgewandte verbleibende Hohlraumabschnitt dient der Aufnahme einer mechanischen Schraubenfeder und ist mit einer Belüftungsöffnung 84 versehen. Das Einstellglied 80 dient hier als Sensor der Schmiermitteltemperatur derart, daß bei Überschreiten eines bestimmten Schwellwertes und damit Übergang des martensitischen in austenitischen Gefüges eine Ausdehnung des schraubenfederförmigen Formgedächtnismetalles in Längsrichtung der schraubenfederförmigen Gestalt stattfindet, worauf das kolbenförmige Einstellorgan 77 gegen die Kraft der Rückstell-Schraubenfeder verschoben wird, so daß sich der für das Schmiermittel zur Verfügung stehende Raum vergrößert. Bei Absinken der Temperatur und damit ermöglichter Martensitbildung verschiebt die Rückstellschraubenfeder 79 den Kolben 77 wieder in Richtung einr Verkürzung des schraubenfederförmigen Formgedächtnismetalls, so daß sich der Hohlraum für das Schmiermittel wieder verringert. Auf diese Weise stellt man sicher, daß zunächst eine bestimmte Temperatur des Schmiermittels erreicht werden muß, bevor eine Schmiermittelraumvergrößerung stattfindet, so daß das dann flüssigere und sich ausdehnende Schmiermittel die Dichtungen nicht im Sinne einer Leckage belastet. Die Verschiebung des Kolbens kann durch entsprechende Reihen-bzw. Parallelschaltung von Formgedächtnismetallen stufenweise erfolgen, wie das bereits im Zuge der vorerwähnten Ausführungsbeispiele dargelegt wurde. Grundsätzlich wäre es auch möglich, mehrere Kolben parallel zu schalten und mit Formgedächtnismetallen unterschiedlicher Temperaturschaltwerte zu beaufschlagen.

Die vorstehend abgehandelten, in der Zeichnung wiedergegebenen Ausführungsbeispiele zeigen nur zum Teil die Verwendung von Kraftspeichern bzw. Federn, die auf diese oder jene Weise mit einem Formänderungsmetall zusammenarbeiten. In einigen oder allen dieser Beispiele können aber Kraftspeicher bzw. Federn vorgesehen sein, die die Formänderungsmetalle in ihre anfängliche Formgebung hin beaufschlagen, um so die Dauerhaftigkeit des Formänderungsvermögens sicherzustellen. Dies ist immer dann ratsam, wenn die auftretenden, unterstützenden Rückstellkräfte in die ursprüngliche Formgebung für einen erlahmungsfreien Betrieb nicht oder nicht zuverlässig dauerhaft ausreichen.

## Patentansprüche

1. Zentrifuge (1) zur Trennung von Stoffen mit mindestens einer im rotierenden Bereich der Zentrifuge mitdrehend angeordneten, durch ein mitdrehendes mechanisches Stellglied (13; 23; 30; 33; 43; 53; 60; 63; 73; 80) gesteuerten Einrichtung (11-12; -22; -27; -32; -42; -52; - 57; -62; 72; 77) für die Bestimmung des Betriebs, beispielsweise Entleerungsventile, periodisch arbeitende Austragsventile, Wehrhöhenverstelleinrichtungen, Druckanpassungsvorrichtungen, Temperatursicherungseinrichtungen und dergleichen, wobei das Stellglied (13; 23; 30; 33; 34; 53; 60; 63; 73; 80) mindestens eine temperaturspezifische Formgebung aufweist und durch Aufheizen und/oder Abkühlen hinsichtlich dieser Formgebung gezielt gesteuert ist,
**dadurch gekennzeichnet,**
daß für die die Formänderung des Stellgliedes (13; 23; 30; 33; 43; 53; 60; 63; 73; 80) hervorrufende Temperaturänderung dessen Umspülen mit einem flüssigen oder gasförmigen Heiz- und/oder Kühlsteuermedium vorgesehen ist.

2. Zentrifuge nach Anspruch 1,
**dadurch gekennzeichnet,**
daß der Formänderungstemperaturbereich des Stellgliedes (13; 23; 30; 33; 43; 53; 60; 72; 73; 80) kleiner ist als der Steuertemperaturbereich, die Formänderung also schlagartig erfolgt.

3. Zentrifuge nach Anspruch 1 oder 2,
**dadurch gekennzeichnet,**
daß das bzw. wenigstens eines der Stellglieder (13; 23; 30; 33; 63; 53; 60; 63; 73; 80) durch ein Formgedächtnismetall, vorzugsweise aus einer Nickel-Titan-Legierung, gebildet ist.

4. Zentrifuge nach einem der Ansprüche 1 bis 3,
**dadurch gekennzeichnet,**
daß das bzw. wenigstens eines der Stellglieder (13; 23; 30; 33; 43; 53; 60; 63; 73; 80) einen wiederholbaren Formänderungseffekt - bei anfänglich gleichbleibender Verformung durch zyklisches Erwärmen und Abkühlen beliebig häufig in eine andere Verformung übergehend und in die anfängliche Verformung zurückkehrend - aufweist.

5. Zentrifuge nach Anspruch 3 oder 4,
**dadurch gekennzeichnet,**
daß das bzw. Wenigstens eines der Stellglieder (13; 23; 30; 33; 43; 53; 60; 63; 73; 80) aus zwei oder mehreren parallel und/oder in Reihe angeordneten Formgedächtnismetallen gebildet sind.

6. Zentrifuge nach Anspruch 3 oder 4,
**dadurch gekennzeichnet,**
daß das bzw. wenigstens eines der Stellglieder (13; 23; 30; 33; 43; 53; 60; 63; 73; 80) aus zwei oder mehreren hinsichtlich ihrer durch temperaturbedingte Gefügeänderung erfolgenden Formänderung bewegungsmäßig einander entgegenwirkend in Reihe und/oder parallel (anti-parallel) geschaltet miteinander verbundenen Formgedächtnismetallen gebildet sind.

7. Zentrifuge nach einem der Ansprüche 3 bis 6,
**dadurch gekennzeichnet,**
daß die Bewegungsrichtung der bzw. wenigstens einer der gesteuerten Einrichtungen (11-12; -22; -27; -52; -57; 72) bei der Umwandlung des zugehörigen Stellgliedes (13; 23; 30; 52; 60; 73) aus Formgedächtnismetall vom martensitischen in den austenitischen Zustand gegen Fliehkraftrichtung und die Rückstellung bei der Rückwandlung des Stellgliedes in den martensitischen Zustand mit Fliehkraftunterstützung erfolgt.

8. Zentrifuge nach einem der Ansprüche 3 bis 7,
**dadurch gekennzeichnet,**
die Bewegungsrichtung der bzw. wenigstens einer der gesteuerten Einrichtungen (11-32; -42; -62; 77) bei Übergang des Stellgliedes (33; 43; 63; 80) aus Formgedächtnismetall vom martensitischen in den austenitischen Zustand entgegen der Kraft einer Rückstellfeder (36; 66; 79) und die Rückstellbewegung bei der Rückwandlung des Stellgliedes in den martensitischen Zustand mit Federkraftunterstützung erfolgt.

9. Zentrifuge nach einem der Ansprüche 3 bis 8,
**dadurch gekennzeichnet,**
daß das bzw. wenigstens eines der Stellglieder aus Formgedächtnismetall als Zugstab (13; 23; 53), Schraubenfeder (30; 33; 60; 63; 73; 80), Torsionsstab (43), oder Biegeelement oder Druckelement ausgebildet ist.

10. Zentrifuge nach einem der Ansprüche 1 bis 9,
**dadurch gekennzeichnet,**
daß das bzw. wenigstens eines der Stellglieder (80) zugleich als Sensor für von der Zentrifuge und/oder der Zentrifugentrommelfüllung bedingte Temperaturen ausgebildet ist.

11. Zentrifuge nach Anspruch 10,
**dadurch gekennzeichnet,**
daß die Temperaturänderung des bzw. wenigstens eines der Stellglieder bei Einleiten von Reinigungsflüssigkeit nach vorherigem Betrieb mit kaltem Schleudermedium erfolgt.

12. Zentrifuge nach Anspruch 10,
**dadurch gekennzeichnet,**
daß die Temperaturänderung des bzw. wenigstens eines der Stellglieder durch Kontakt mit auslaufendem Schleudermedium erfolgt.

13. Zentrifuge nach Anspruch 10,
**dadurch gekennzeichnet,**
daß ein mit Schmiermittel gefüllter Lagerraum, insbesondere Schneckenlagerinnenraum, als Druckausgleichskammer (87, 81, 83) ausgebildet ist bzw. mit einer solchen in Verbindung steht, deren Rauminhalt mittels eines in Kontakt mit dem Schmiermittel stehenden Stellgliedes (80) bei Schmiermittel-Temperaturanstieg vergrößerbar ist, vorzugsweise mit Hilfe wenigstens eines in einem Hohlraum (78) geführten Kolbens (77), an dessen dem Schmiermittel ausgesetzter Stirnseite das Stellglied - bevorzugt in Gestalt wenigstens eines schraubenfederförmigen Formgedächtnismetalls (80) - angeordnet ist und an dessen anderer Stirnseite eine Rückstellfeder (79) angreift.

14. Zentrifuge nach einem der Ansprüche 1 bis 12,
**dadurch gekennzeichnet,**
daß die oder wenigstens eine der gesteuerten Einrichtungen als Einstellorgan (12; 22; 27; 32; 42; 52; 57; 62) zum Öffnen und Schließen einer Düsenöffnung (11) ausgebildet ist, an welches Einstellorgan das zugehörige Stellglied (13; 23; 30; 33; 43; 53; 60; 63) angeschlossen ist.

15. Zentrifuge nach Anspruch 14,
**dadurch gekennzeichnet,**
daß die bzw. Wenigstens eine der Düsenöffnungen (11) im radial außen gelegenen Bereich der Zentrifugentrommel (2) so angeordnet ist, daß durch diese Düsenöffnung die Zentrifugentrommel entleerbar ist.

16. Zentrifuge nach Anspruch 14,
**dadurch gekennzeichnet,**
daß die bzw. wenigstens einer der Düsenöffnungen (11) im Dickschlammbereich der Zentrifugentrommel (2) so angeordnet ist, daß durch diese Düsenöffnung periodisch Dickschlamm aus der Zentrifugentrommel entleerbar ist.

17. Zentrifuge nach Anspruch 14,
**dadurch gekennzeichnet,**
daß die bzw. eine der Düsenöffnungen (11) auf einem größeren Durchmesser angeordnet ist als ein in der Zentrifugentrommel (2) vorgesehenes Überlaufwehr (10), so daß bei geöffneter Düsenöffnung sich ein Innendurchmesser des Flüssigkeitsspiegels einstellt, der größer ist als der durch das Überlaufwehr (10) bestimmte Innendurchmesser.

18. Zentrifuge nach Anspruch 17,
**dadurch gekennzeichnet,**
daß sich die bzw. wenigstens eine der Düsenöffnungen (11) zwischen zwei mit Abstand zueinander angeordneten Wehrscheiben (10, 50) befindet, wobei die zum Trennraum gerichtete Wehrscheibe (50) einen größeren Innendurchmesser aufweist als die andere Wehrscheibe (10), so daß bei geöffneter Düsenöffnung sich der Flüssigkeitsinnendurchmesser nach der Wehrscheibe (50) mit dem größeren Innendurchmesser und bei geschlossener Düsenöffnung nach der Wehrscheibe (10) mit dem kleineren Innendurchmesser einstellt.

19. Zentrifuge nach einem der Ansprüche 1 bis 13,
**dadurch gekennzeichnet,**
daß das bzw. wenigstens eines der Stellglieder (73) - insbesondere als temperaturabhängig längenveränderlicher Stab oder Hohlstab ausgebildet - an eine gegenüber einer Ablauföffnung (20) etwa radial verschiebbar gelagerte Wehrplatte (10) angeschlossen ist.

20. Zentrifuge nach einem der Ansprüche 1 bis 19,
**dadurch gekennzeichnet,**
daß sie als Vollmantelschneckenzentrifuge (1) ausgebildet ist.

21. Zentrifuge nach einem der Ansprüche 1 bis 19,
**dadurch gekennzeichnet,**
daß sie als Tellerzentrifuge ausgebildet ist.

22. Zentrifuge nach einem der Ansprüche 1 bis 21,
**dadurch gekennzeichnet,**
daß das Stellglied unter der Kraft eines Kraftspeichers, insbesondere einer Feder, in seine jeweilige Ausgangsformgebung beaufschlagt ist.

## Claims

1. Centrifuge (1) for separating substances having at least one device (11-12; -22; -27; -32; -42; -52; -57; -62; 72; 77) located for co-rotation in the rotating region of the centrifuge and controlled by a co-rotating mechanical actuator (13; 23; 30; 33; 43; 53; 60; 63; 73; 80) for determining the operation of, for example, drain valves, periodically functioning discharge valves, sill height adjustment devices, pressure adjustment devices, temperature regulating devices and the like, the said actuator (13; 23; 30; 33; 34; 53; 60; 63; 73; 80) exhibiting at least one temperature specific configuration and being purposefully controlled in respect of this configuration by heating and/or cooling, characterized in that the temperature change which causes the change of shape of the actuator (13; 23; 30; 33; 43; 53; 60; 63; 73; 80) is provided by bathing the same in a liquid or gaseous heating and/or cooling control medium.

2. Centrifuge according to claim 1, characterized in that the shape changing temperature range of the actuator (13; 23; 30; 33; 43; 53; 60; 72; 73; 80) is smaller than the control temperature range so that the shape change takes place suddenly.

3. Centrifuge according to claim 1 or 2, characterized in that the or at least one of the actuators (13; 23; 30; 33; 43; 53; 60; 63; 73; 80) is made of a memory metal, preferably of a nickel-titanium alloy.

4. Centrifuge according to one of the claims 1 to 3, characterized in that the or at least one of the actuators (13; 23; 30; 33; 43; 53; 60; 63; 73; 80) exhibits a repeatable shape change effect - with an initially uniform shape change through cyclic heating and cooling as often as desired into a different shape and returning to the initial shape change.

5. Centrifuge according to claim 3 or 4, characterized in that the or at least one of the actuators (13; 23; 30; 33; 43; 53; 60; 63; 73; 80) is made of two or more memory metals arranged in parallel and/or in series.

6. Centrifuge according to claim 3 or 4, characterized in that the or at least one of the actuators (13; 23; 30; 33; 43; 53; 60; 63; 73; 80) is made of two or more memory metals which in respect of their shape change effected in response to temperature responsive structural change are connected to each other in series and/or parallel (anti-parallel) so as to act against each other in displacement.

7. Centrifuge according to one of the claims 3 to 6, characterized in that the direction of movement of the or at least one of the controlled devices (11-12; -22; -27; -52; -57; 72), upon transformation of the associated actuator (13; 23; 30; 52; 60; 73) of memory metal from the martensitic into the austenitic state, takes place against the direction of centrifugal force and the return into the martensitic structure, upon reverse transformation of the actuator, takes place with centrifugal force reinforcement.

8. Centrifuge according to one of the claims 3 to 7, characterized in that the direction of movement of the or at least one of the controlled devices (11-32; -42; -62; 77), upon transition of the actuator (33; 43; 63; 80) of memory metal from the martensitic into the austenitic state, takes place against the force of a restoring spring (36; 66; 79) and the return movement, upon reversion of the actuator into the martensitic state, takes place with spring force reinforcement.

9. Centrifuge according to one of the claims 3 to 8, characterized in that the or at least one of the actuators of memory metal takes the form of a pull rod (13; 23; 53), coil spring (30; 33; 60; 63; 73; 80), torsion rod (43), or bending member or pressure member.

10. Centrifuge according to one of the claims 1 to 9, characterized in that the or at least one of the actuators (80) simultaneously constitutes the sensor for temperatures established by the centrifuge and/or the centrifuge bowl contents.

11. Centrifuge according to claim 10, characterized in that the temperature change of the or at least one of the actuators takes place upon introduction of cleaning liquid after prior operation with cold centrifuged medium.

12. Centrifuge according to claim 10, characterized in that the temperature change of the or at least one of the actuators takes place through contact with outflowing centrifuged medium.

13. Centrifuge according to claim 10, characterized in that a bearing space filled with lubricant, in particular the helix bearing interior, is in the form of a pressure equalization chamber (87, 81, 83) or is in communication with one such chamber, of which the internal volume can be enlarged by means of an actuator (80) in contact with the lubricant upon lubricant temperature rise, preferably with the assistance of at least one piston (77) guided within a hollow space (78) at whose end face exposed to the lubricant there is positioned the actuator - preferably in the form of at least one coil spring shaped memory metal (80) - and against whose opposite end face there bears a restoring spring (79).

14. Centrifuge according to one of the claims 1 to 12, characterized in that the or at least one of the controlled devices is in the form of an operator (12; 22; 27; 32; 42; 52; 57; 62) for opening and closing a nozzle orifice (11), to which operator the associated actuator (13; 23; 30; 33; 43; 53; 60; 63) is connected.

15. Centrifuge according to claim 14, characterized in that the or at least one of the nozzle orifices (11) in the radially outward located region of the centrifuge bowl (2) is so arranged that the centrifuge bowl can be emptied through this nozzle orifice.

16. Centrifuge according to claim 14, characterized in that the or at least one of the nozzle orifices (11) in the thick sludge region of the centrifuge bowl (2) is so arranged that thick sludge can be periodically emptied from the centrifuge bowl through this nozzle orifice.

17. Centrifuge according to claim 14, characterized in that the or one of the nozzle orifices (11) is arranged on a greater diameter than an overflow sill (10) provided within the centrifuge bowl (2) so that when the nozzle orifice is open there is established an internal diameter of the liquid level which is greater than the internal diameter determined by the overflow sill (10).

18. Centrifuge according to claim 17, characterized in that the or at least one of the nozzle orifices (11) is located between two space-apart sill plates (10, 50), wherein the sill plate (50) facing the separating chamber exhibits a larger internal diameter than the other sill plate (10), so that when the nozzle orifice is open the internal diameter of the liquid after the sill plate (50) assumes the greater internal diameter and when the nozzle orifice is closed the liquid after the sill plate (10) assumes the smaller internal diameter.

19. Centrifuge according to one of the claims 1 to 13, characterized in that the or at least one of the actuators (73) - especially formed as a rod or hollow rod whose length is variable as a function of temperature - is connected to a sill plate (10) which is positioned approximately radially slidable with respect to a discharge opening (20).

20. Centrifuge according to one of the claims 1 to 19, characterized in that it takes the form of a solid bowl worm centrifuge (1).

21. Centrifuge according to one of the claims 1 to 19, characterized in that it is in the form of a disk centrifuge.

22. Centrifuge according to one of the claims 1 to 21, characterized in that the actuator is made to assume its respective starting shape under the force of a force storage means, specifically a spring.

## Revendications

1. Centrifugeuse (1) pour la séparation de matières comprenant au moins un dispositif (11-12; -22; -27; -32; -42; - 52; -57; -62; 72; 77) arrangé pour co-rotation dans la région rotative de la centrifugeuse et étant commandé au moyen d'un actionneur mécanique co-rotatif (13; 23; 30; 33; 43; 53; 60; 63; 73; 80) pour déterminer le fonctionnement par exemple de soupapes de vidange, soupapes de décharge à fonction périodique, dispositifs pour le réglage en hauteur du barrage, dispositifs de réglage de pression, dispositifs de réglage de température etc., ledit actionneur (13; 23; 30; 33; 34; 53; 60; 63; 73; 80) ayant au moins une configuration propre à une température et étant commandé d'une manière adéquate en regard de cette configuration par chauffage et/ou refroidissement, caractérisée en ce que pour le changement de température faisant naître le changement de forme de l'actionneur (13; 23; 30; 33; 43; 53; 60; 63; 73; 80) on a prévu de baigner ledit actionneur dans un médium de commande chauffant et/ou réfrigérant en forme liquide ou gazeux.

2. Centrifugeuse selon la revendication 1, caractérisée en ce que le régime de température pour le changement de forme de l'actionneur (13; 23; 30; 33; 43; 53; 60; 72; 80) est inférieur au régime de température de commande, de sorte que le changement de forme est effectué brusquement.

3. Centrifugeuse selon la revendication 1 ou 2, caractérisée en ce que l'actionneur ou l'un au moins des actionneurs (13; 23; 30; 33; 43; 53; 60; 73; 80) est constitué par un métal à mémoire, de préférence par un alliage nickeltitane.

4. Centrifugeuse selon l'une quelconque des revendications 1 à 3, caractérisée en ce que l'actionneur ou l'un au moins des actionneurs (13; 23; 30; 33; 43; 53; 60; 63; 73; 80) présente un effet de changement de forme à répéter - avec un changement de forme initialement uniforme par chauffage et refroidissement cyclique aussi souvent que désiré en une forme différente et un retour au changement de forme initial.

5. Centrifgeuse selon la revendication 3 ou 4, caractérisée en ce que l'actionneur ou l'un au moins des actionneurs (13; 23; 30; 33; 43; 53; 60; 63; 73; 80) est constitué par deux ou plusieurs métaux à mémoire arrangés en parallel et/ou en série.

6. Centrifugeuse selon la revendication 3 ou 4, caractérisée en ce que l'actionneur ou l'un au moins des actionneurs (13; 23; 30; 33; 43; 53; 60; 63; 73; 80) est constitué par deux ou plusieurs métaux à mémoire qui sont, concernant leur changement de forme effectué en réponse d'un changement de structure conditionné par température, reliés l'un à l'autre en série et/ou en parallèle (anti-parallèle), de sorte qu'ils agissent l'un contre l'autre en mouvement.

7. Centrifugeuse selon l'une quelconque des revendications 3 to 6, caractérisée en ce que la direction de mouvement du dispositif commandé ou l'un au moins des dispositifs commandés (11-12; -22; -27; -52; -57; 72) est, à la transformation de l'actionneur associé (13; 23; 30; 52; 60; 73) en métal à mémoire de l'état martensitique en l'état austénitique, effectuée contre la direction d'une force centrifuge et le retour en la structure martensitique est, à la retransformation de l'actionneur en l'état martensitique, effectué avec l'assistance de force centrifuge.

8. Centrifugeuse selon l'une quelconque des revendications 3 to 7, caractérisée en ce que la direction de mouvement du dispositif commandé ou l'un au moins des dispositifs commandés (11-32; -42; -62; 77) est, à la transition de l'actionneur (33; 43; 63; 80) en métal à mémoire de l'état martensitique en l'état austénitique, effectuée contre la force d'un ressort de rappel (36; 66; 79) et le mouvement de retour est, à la retransformation de l'actionneur en l'état martensitique, effectué avec l'assistance de force de ressort.

9. Centrifugeuse selon l'une quelconque des revendications 3 à 8, caractérisée en ce que l'actionneur ou l'un au moins des actionneurs (13; 23; 53) en métal à mémoire affecte la forme d'un tirant (13; 23; 53), ressort hélicoïdal (30; 33; 60; 63; 73; 80), d'une barre de torsion (43), d'un élément de flexion ou d'un élément de pression.

10. Centrifugeuse selon l'une quelconque des revendications 1 à 9, caractérisée en ce que l'actionneur ou l'un au moins des actionneurs (80) simultanément constitue le détecteur pour températures établies par la centrifugeuse et/ou par le contenu du panier de la centrifugeuse.

11. Centrifugeuse selon la revendication 10, caractérisée en ce que le changement de température de l'actionneur ou l'un au moins des actionneurs est effectué à l'introduction d'un liquide de nettoyage après l'opération antérieure avec d'un médium centrifugé froid.

12. Centrifugeuse selon la revendication 10, caractérisée en ce que le changement de température de l'actionneur ou l'un au moins des actionneurs est effectué par le contact avec d'un médium centrifugé s'écoutant.

13. Centrifugeuse selon la revendication 10, caractérisée en ce qu'un espace de palier rempli d'un lubrifiant, en particulier l'intérieur du palier de la vis, est en forme de chambre compensatrice de pression (87, 81, 83) ou est en communication avec l'une de ces chambres, dont le volume intérieur peut être agrandi au moyen d'un actionneur (80) étant en contact avec le lubrifiant à l'élévation de température, de préférence avec l'assistance d'au moins un piston (77) guidé à l'intérieur d'un creux (78), à la face terminale dudit piston exposée au lubrifiant est positionné l'actionneur - de préférence en forme d'au moins un métal à mémoire affectant la forme d'un ressort hélicoïdal (80) - et à la face terminale opposée dudit actionneur s'applique un ressort de rappel (79).

14. Centrifugeuse selon l'une quelconque des revendications 1 à 12, caractérisée en ce que le dispositif commandé ou l'un au moins des dispositifs commandés est en forme d'organe d'ajustage (12; 22; 27; 32; 42; 52; 57; 62) pour ouvrir et fermer une orifice de buse (11), auquel organe d'ajustage est relié l'actionneur associé (13; 23; 30; 33; 43; 53; 60; 63).

15. Centrifugeuse selon la revendication 14, caractérisée en ce que l'orifice de buse ou l'une au moins des orifices de buse (11) dans la région radiale extérieure du panier de centrifugeuse (2) est arrangée de sorte que le panier de la centrifugeuse peut être vidangé à travers de cette orifice de buse.

16. Centrifugeuse selon la revendication 14, caractérisée en ce que l'orifice de buse ou l'une au moins des orifices de buse (11) dans la région de boues épaissies du panier de la centrifugeuse (2) est arrangée de sorte que les boues épaissies peuvent être vidangées de la centrifugeuse à travers de cette orifice de buse.

17. Centrifugeuse selon la revendication 14, caractérisée en ce que l'orifice de buse ou l'une au moins des orifices de buse (11) est arrangée sur un plus grande diamètre qu'un déversoir de superficie (10) prévu à l'intérieur du panier de la centrifugeuse (2) de sorte qu'est produit, avec l'orifice de buse étant ouverte, un diamètre intérieur du niveau du liquide supérieur au diamètre intérieur déterminé par le déversoir de superficie (10).

18. Centrifugeuse selon la revendication 17, caractérisée en ce que l'orifice de buse ou l'une au moins des orifices de buse (11) se trouve entre deux plaques de déversoir (10, 50) écartés l'un par rapport à l'autre, la plaque de déversoir (50) dirigée vers la chambre de sépartion présentant un diamètre intérieur plus grand que l'autre plaque de déservoir (10), de sorte qu'avec l'orifice de buse étant ouverte le diamètre intérieur du liquide après la plaque de déservoir (50) affecte le diamètre intérieur plus grand et de sorte qu'avec l'orifice de buse étant fermée le liquide après la plaque de déservoir (10) affecte le diamètre intérieur plus petit.

19. Centrifugeuse selon l'une quelconque des revendications 1 à 13, caractérisée en ce que l'actionneur ou l'un au moins des actionneurs (73) - en particulier en forme de barre ou barre creux dont la longueur est variable en fonction de température - est relié à une plaque de déservoir (10) qui est positionnée de sorte à être mobile à peu près radialement en regard d'une orifice de vidange (20).

20. Centrifugeuse selon l'une quelconque des revendications 1 à 19, caractérisée en ce qu'elle affecte la forme de centrifugeuse à vis de bol plein (1).

21. Centrifugeuse selon l'une quelconque des revendications 1 à 19, caractérisée en ce qu'elle est en forme de centrifugeuse à plateau.

22. Centrifugeuse selon l'une quelconque des revendications 1 à 21, caractérisée en ce que l'actionneur est causé d'affecter sa configuration initiale respective sous la force d'un accumulateur de force, en particulier d'un ressort.
